**Europäisches Patentamt**

(19) **European Patent Office**

**Office européen des brevets**

(11) Veröffentlichungsnummer: **0 062 271**
**B1**

(12) EUROPÄISCHE PATENTSCHRIFT

(45) Veröffentlichungstag der Patentschrift:
**19.06.85**

(51) Int. Cl.⁴: **F 16 B 39/282**

(21) Anmeldenummer: **82102619.2**

(22) Anmeldetag: **29.03.82**

(54) **Befestigungselement.**

(30) Priorität: **06.04.81 AT 1576/81**

(43) Veröffentlichungstag der Anmeldung:
**13.10.82 Patentblatt 82/41**

(45) Bekanntmachung des Hinweises auf die Patenterteilung:
**19.06.85 Patentblatt 85/25**

(84) Benannte Vertragsstaaten:
**BE CH DE FR GB IT LI LU NL SE**

(56) Entgegenhaltungen:
**DE - A - 2 845 072**
**DE - B - 1 750 063**
**DE - U - 1 978 440**
**FR - A - 2 219 699**
**US - A - 2 096 040**
**US - A - 3 491 630**
**US - A - 3 531 850**

(73) Patentinhaber: **Fink, Hans, Riedweg 19, A-6850 Dornbirn (AT)**

(72) Erfinder: **Fink, Hans, Riedweg 19, A-6850 Dornbirn (AT)**

(74) Vertreter: **Hefel, Herbert, Dipl.-Ing., Egelseestrasse 65a Postfach 61, A-6800 Feldkirch (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung bezieht sich auf ein Befestigungselement nach dem Oberbegriff des Anspruchs 1, bekannt aus z. B. der US-A-2 096 040.

Um das Lockern von Befestigungselementen zu vermeiden, hat man bereits Wülste in verschiedenster Anordnung an den Befestigungselementen vorgesehen. Allen Lösungsvorschlägen gemeinsam ist dabei die Vorstellung, daß das Losdrehen einer Schraube dadurch zu verhindern sei, daß man Vorkehrungen trifft, welche einem in Losdrehrichtung wirkenden Drehmoment um die Schraubenachse entgegenwirken. Die Erfindung geht demgegenüber von der Überlegung aus, daß ein solches Drehmoment von vorneherein gar nicht wirksam werden kann, wenn die auf den befestigten Teil wirkenden Querkräfte zu keiner Verschiebung mit einer Radialkomponente zur Achse des Befestigungselementes führen können. Die Erfindung kommt damit ohne alle jene Maßnahmen aus, die bei bekannten Schraubensicherungen vorgesehen wurden, um wenigstens zusätzlich zur Verhinderung einer Radialverschiebung eine reine Drehbewegung der Schraube zu verhindern.

Um eine reine Drehbewegung um die Schraubenmittelachse auszuschließen, sieht die Schraubensicherung nach der US-A-2 096 040 kreisbogenförmig verlaufende Verdrängungsrippen an der zum Werkstück hin gerichteten Oberfläche eines Befestigungselementes vor, wobei diese Verdrängungsrippen jeweils Bogenabschnitte bilden und aufeinanderfolgende Verdrängungsrippenabschnitte mäanderbandähnlich versetzt zueinander angeordnet sind. Es ergibt sich dadurch beim Anziehen einer Mutter eine in sich zusammenhängende, mäanderförmig verlaufende Verdrängung im Werkstück, wobei durch diesen verdrängten Werkstoff, welcher die Seiten und die Enden dieser Verdrängungsrippenabschnitte umfaßt, ein Vor- bzw. Rückwärtsdrehen der Mutter verhindert werden soll. Bei dieser Ausführung ist ein Weiterdrehen der Mutter nach völligem Eindringen der Verdrängungsrippen in das Werkstück mit dauernder weiterer Verformungsarbeit verbunden. Die Gräben, in welche diese Verdrängungsrippen eingebettet sind, werden bei einer Verdrehung der Mutter dauernd wieder aufgerissen und zugestrichen. Besonders bei »weichen« Schraubfällen, also mit mehreren elastischen Zwischenlagen und einem daraus resultierenden großen Anzugsweg der Mutter, wird die Wirkungsweise dieser mäanderförmig angeordneten Rippen bereits aufgehoben. Dies erhöht in unkontrollierbarer Weise auch die Reibwerte sowie das Drehmoment beim Anziehen der Mutter, ohne eine entsprehend große Erhöhung des Drehwiderstandes zur Folge zu haben. Bei dieser Ausführung wird also als besonders wesentlich erachtet, eine Drehsicherung einer Mutter zu erreichen, indem eine starke Materialbewegung an den Kontaktflächen zwischen dem Befestigungselement und dem Werkstück erfolgt.

Durch diese Materialverformung kann eine radiale Verschiebung zwischen den Kontaktflächen nicht unterbunden werden, da nur eine breite, unebene Riefe in das Werkstück geformt wird. Sobald also auch nur eine geringfügige radiale Relativbewegung zwischen den Kontaktflächen ermöglicht wird, nützen auch die Maßnahmen zur Erhöhung des Lösungsdrehmomentes nichts mehr.

Die Theorie über die Mechanik des selbsttätigen Lösens von Schraubenverbindungen basiert auf einem bekannten physikalischen Gesetz der Reibung zwischen festen Körpern: Wird die Reibungskraft zwischen zwei Körpern in einer Richtung durch eine äußere Kraft überwunden, so kann eine zusätzliche Bewegung in anderer Richtung durch Kräfte, die kleiner als die Reibungskraft sind, erzwungen werden.

Unterstellt man jedoch, daß in Folge des Einwirkens äußerer Kräfte Relativbewegungen zwischen den Gewindeflanken und den Kopfauflageflächen der spannenden Teile einerseits und der verspannten Teile andererseits auftreten, z. B. in radialer oder tangentialer Richtung, so wird ähnlich wie das Gewicht auf der in Schwingung versetzten schiefen Ebene das verschraubte System in Umfangsrichtung reibungsfrei, so daß unter der auf die schiefe Ebene des Gewindes wirkenden Vorspannkraft eine Komponente in Umfangsrichtung — und zwar in Losdrehrichtung — entsteht.

Schraubverbindungen, die reinen Axialbelastungen ausgesetzt sind, weisen nur Losdrehvorgänge um wenige Grade auf, da die Relativbewegungen sehr klein sind.

Bei dynamisch querbelasteten Verbindungen können die Relativbewegungen zwischen den Gewindeflanken und in der Kopf- oder Mutternauflage jedoch bedeutend größer werden, und zwar im Gewinde bis zur Größenordnung des maximalen Gewindespieles. Sie treten auf, wenn Querbelastungen, die von einer verspannten Verbindung durch Reibschluß aufzunehmen sind, größer werden als die durch die Klemmkraft erzeugte Reibungskraft zwischen den verspannten Teilen. Die eintretenden Querschiebungen zwischen den verspannten Teilen zwingen dabei der Schraube eine Pendelbewegung auf, die zu Relativbewegungen im Mutterngewinde führt. Sind die Amplituden solcher Querschiebungen groß genug, kommt es schließlich auch zum Gleiten unter dem Schraubenkopf bzw. der Mutter, womit die Verbindung sich so verhält, als sei sie in Umfangsrichtung reibungsfrei.

Solche Querverschiebungen sind in der Praxis weit häufiger als man gemeinhin annimmt, und die Erfahrung lehrt, daß gerade diese Verbindungen am häufigsten durch selbsttätiges Lösen versagen.

Die Erfindung hat sich daher zur Aufgabe gestellt, ein Befestigungselement zu schaffen, mit welchem allein eine radiale Verschiebung zwischen den Kontaktflächen unterbunden werden kann, um so eine lösungssichere Schraubenverbindung zu erreichen.

Erfindungsgemäß gelingt dies dadurch, daß der Wulst einen Kreisbogen einheitlichen Durchmessers bildet, der sich — allenfalls mit geringen Unterbrechungen — über den ganzen Umfang erstreckt.

Dieser Wulst drückt sich in das benachbarte Werkstück bzw. das benachbarte Befestigungselement ein, so daß eine wirksame Sicherung gegen ein radiales Verschieben des Schraubenkopfes bzw. der Mutter gegenüber dem zu spannenden Werkstück geschaffen wird. Das gefürchtete Kippmoment bzw. eine Relativbewegung unter der Kopfauflage kann gar nicht mehr auftreten. Durch die Anordnung einer solchen Wulst wird in dem gegenüberliegenden Teil eine Nut eingeformt, so daß neben der kraftschlüssigen Verbindung durch das Anzugsmoment auch eine formschlüssige Verbindung sowie eine formschlüssige Auflage zwischen dem Schraubenkopf bzw. der Mutter und dem Werkstück zustandekommt, welche jedoch nur ein Verschieben in radialer Richtung verhindert. Durch ein erfindungsgemäß ausgestaltetes Befestigungselement ist eine Verdrehung ohne weiteres möglich. Das Drehmoment zum Anziehen der Mutter wird für den Wulst nur so lange verändert, bis der Wulst gänzlich in das Werkstück eingedrungen ist. Von besonderem Vorteil ist die erfindungsgemäße Ausgestaltung eines Befestigungselementes daher auch deshalb, weil dadurch das Anzugsmoment einer Schraubenverbindung exakt kontrollierbar ist. Der vorstehende Wulst drückt sich nach entsprechender Zunahme des Anzugsdrehmomentes in die gegenüberliegende Fläche ein, wobei nach dem vollständigen Eindringen des Wulstes durch die nunmehr ansetzende große Oberfläche ein spürbarer Unterschied beim Anziehen einer Schraubenverbindung entsteht, wobei eine Anpassung an verschiedene Streckgrenzenausnutzungen der Schrauben durchaus erreichbar ist.

Durch die erfindungsgemäße Anordnung sind keine zusätzlichen Maßnahmen zu treffen, die eine Erhöhung des Lösedrehmomentes bewirken. Wenn es zu keiner Radialrelativbewegung zwischen den Kontaktflächen kommen kann, kommt es auch nicht zu einem Losdrehen der Schrauben, so daß die Reibungskräfte zwischen den ebenen, aneinander anliegenden Flächen ausreichen.

Die Ausführung nach der DE-A-2 845 072 betrifft überhaupt kein Befestigungselement, da mittels der dort dargestellten Schraube kein Teil an einem anderen befestigt wird, sondern nur eine Öffnung in dem eine Schraube aufnehmenden Teil verschlossen wird. Der Fachmann konnte dieser Veröffentlichung somit keine Anregung entnehmen, die das Lösen von Schrauben aufgrund von Querkräften, die auf einen befestigten Teil wirken, zu verhindern sei. Die in dieser Druckschrift vorgesehenen ringförmigen Wülste dienen ausschließlich Dichtzwecken.

In der DE-U-1 978 440 ist eine Schraubensicherung beschrieben, welche auf schräg zur Mittelachse verlaufenden Sicherungsringen beruht, welche mit den ebenen Unterlegscheiben, auf die sich die vorliegende Erfindung bezieht, nur bedingt vergleichbar sind. Die auf den federnden Dichtringen vorgesehenen, kreisringförmigen Wülste dienen dort zur Dichtung, wogegen die Schraubensicherung mittels der federnden Anpressung der Dichtringe an die benachbarten Elemente erfolgen soll. Beim Niederschrauben der Dichtringe erfolgt eine radiale Verschiebung der kreisringförmigen Wülste, welche diese einseitig freistellt und somit den erzielbaren Widerstand gegenüber radialen Verschiebungen im Vergleich zu einem erfindungsgemäßen Ringwulst mit identischen Abmessungen auf die Hälfte herabsetzt.

Auch bei der Ausführung nach der DE-B-1 750 063 bewirken die zur Verhinderung von Drehungen vorgesehenen Zähne eine einseitige Freistellung des vorgesehenen, die Zähne umfassenden Ringwulstes. Im Vergleich zu einer anmeldungsgemäßen Einrichtung, bei welcher der Ringwulst aus der ansonsten ebenen Anlageoberfläche aufsteht, ergibt sich wiederum eine Halbierung des Widerstandes gegen Radialverschiebungen, wodurch überhaupt erst die Notwendigkeit auftritt, die in der Herstellung teure Verzahnung vorzusehen.

Gemäß der FR-A-2 219 699 verlaufen die vorgesehenen Ringwülste exzentrisch zur Mittelachse, um in Tangentialrichtung wirkenden Kräften einen Widerstand entgegenzusetzen. Es fehlt hier wiederum die Erkenntnis, daß solche tangential wirkenden Kräfte von vorneherein nicht auftreten, wenn radiale Verschiebungen völlig ausgeschlossen werden. Die Einrichtung nach dieser Druckschrift läßt solche radiale Verschiebungen geringen Ausmaßes ja auch tatsächlich zu, daß beim Eindrehen der spiralförmigen oder exzentrischen Wülste in die Unterlage Rillen entstehen, an denen die Wülste nicht beidseitig satt anliegen.

Weitere erfindungsgemäße Merkmale und besondere Vorteile werden in der nachstehenden Beschreibung anhand der Zeichnungen noch näher erläutert. Es zeigt

Fig. 1a ein Diagramm betreffend die Grenzverschiebung für Starrschrauben,

Fig. 2 eine Seitenansicht einer Schraube, wobei ein Teil des Kopfes aufgeschnitten dargestellt ist,

Fig. 3 eine Mutter teilweise geschnitten dargestellt,

Fig. 4 einen Querschnitt durch eine Unterlegscheibe.

Fig. 5 eine Draufsicht auf eine Unterlegscheibe mit einer besonderen Ausführungsform des Wulstes,

Fig. 6 eine Draufsicht auf eine Unterlegscheibe mit zwei koaxial zueinander verlaufenden Wülsten, die

Fig. 7 und 8 Querschnitte durch Unterlegscheiben mit verschiedenen Ausführungsformen, die

Fig. 9 und 10 zwei Verschraubungsbeispiele in teilweisem Schnitt.

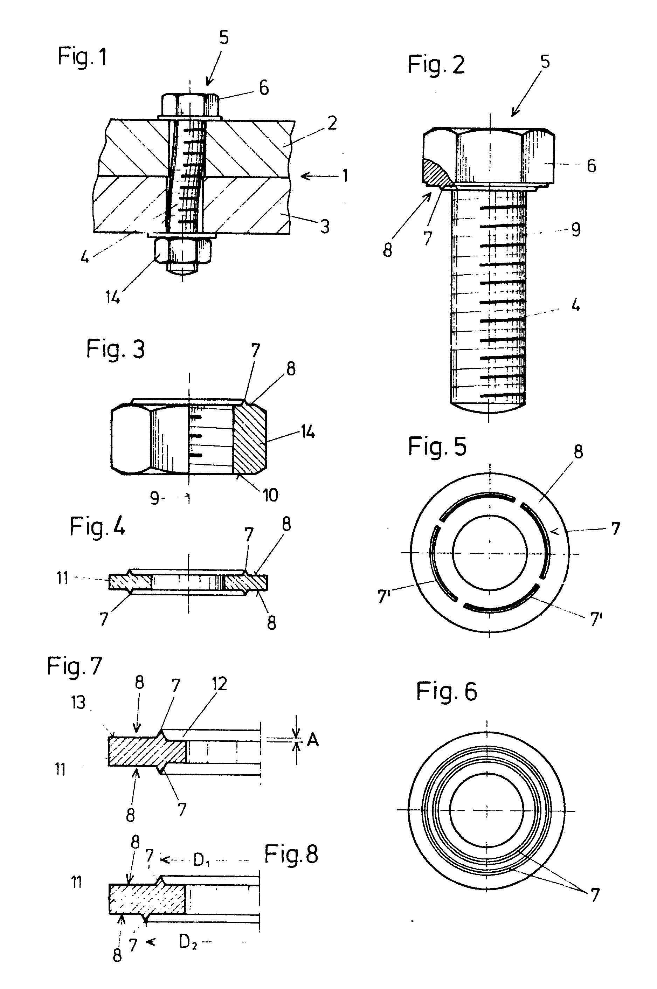

Fig. 1 zeigt eine vorgespannte Schraubenverbindung, welche durch Querkräfte beansprucht wird. Wenn diese Querkräfte ausreichend groß sind, um den Reibschluß in der Trennfuge 1 zwischen den verspannten Teilen 2 und 3 zu überwinden, wenn sich also diese vorgespannten Teile gegeneinander verschieben, dann wird der Schaft 4 der Schraube 5 in der dargestellten Weise verformt. Wird diese Bewegung so groß, daß der Biegewiderstand des Schraubenschaftes 4 überwunden wird, dann tritt auch ein Gleiten des Schraubenkopfes 6 und der Mutter 14 in radialer Richtung gegenüber den verspannten Teilen 2 und 3 auf. Somit tritt unter dem Schraubenkopf und unter der Mutter ein Schlupf ein, so daß die Selbsthemmung der Schraubenverbindung aufgehoben ist. Die Schraubenverbindung dreht sich dann selbsttätig los, auch wenn die bekannten Ausführungen von das Lösedrehmoment vergrößernden Maßnahmen vorgesehen sind.

Fig. 1a zeigt die experimentell ermittelte Grenzverschiebung s für Starrschrauben M 10. Sehr deutlich wird hier der Einfluß der Klemmlänge, also der Schraubenlänge, und der Vorspannkraft ersichtlich. Auch der Einfluß des Reibungskoeffizienten an der Kopfauflage — cadmiert bzw. schwarz mit $MoS_2$-Schmierung — ist gut zu erkennen.

Die Kurve für die Grenzverschiebung s teilt dieses Vorspannungs-Grenzverschiebungs-Diagramm in zwei Felder auf. Links von der Kurve liegt das Gebiet, in dem eine zusätzliche Sicherung der Schraubverbindung nicht erforderlich ist, weil die Grenzverschiebung s nicht überschritten wird und damit auch kein selbsttätiges Lösen zu befürchten ist. Rechts von der Kurve liegt das Losdrehgebiet. Hier wird die Grenzverschiebung überschritten, d. h., unter dem Schraubenkopf und unter der Mutter tritt ein Schlupf ein, die Selbsthemmung ist aufgehoben und die Schraubenverbindung dreht sich selbsttätig los. Dieses folgende Losdrehen kann durch den Einsatz geeigneter Schraubensicherungen beeinflußt, aber nicht verhindert werden.

Mit einer Ausführung gemäß der vorliegenden Erfindung soll der Schlupf zwischen dem Schraubenkopf bzw. der Mutter und den zu verschraubenden Teilen also eine radiale Verschiebung des Schraubenkopfes, der Mutter oder der Unterlegscheibe gegenüber dem Werkstück, verhindert werden.

Der Fig. 2 ist ein Ausführungsbeispiel in Form einer Schraube 5 zu entnehmen, welche aus einem Schraubenkopf 6 und dem Schaft 4 besteht. An der der zu verspannenden Werkstückoberfläche zugewandten Oberfläche 8 des Schraubenkopfes 6 ist ein ringförmig verlaufender Wulst 7 vorgesehen, welcher achsgleich zur Mittelachse 9 der Schraube 5 ausgerichtet ist. Eine derartige Ausführungsform wird dann verwendet, wenn die Oberfläche 8 direkt mit dem zu verschraubenden Werkstück in Kontakt kommt. Hier wird also keine Unterlegscheibe benötigt. Der Wulst gräbt sich in die Oberfläche des zu verschraubenden Werkstückes ein, so daß ein Verschieben des Schraubenkopfes gegenüber dieser Werkstückoberfläche von vorneherein ausgeschlossen wird. Ein Lösen der Schraubverbindung kommt dadurch nicht zustande. Die Festigkeit des Wulstes muß so groß sein, um das Gegenmaterial verformen zu können. Es werden daher die notwendigen Festigkeitswerte bei den verschiedenen Schraubverbindungen je nach der Paarung der Werkstoffe berücksichtigt.

Beim gezeigten Beispiel weist der Wulst 7 im Querschnitt geradlinig verlaufende Begrenzungsflächen auf, wobei hier speziell ein dreieckförmiger Querschnitt vorgesehen ist. Selbstverständlich ist es auch denkbar, diesen Wulst im Querschnitt rechteckig oder trapezförmig auszubilden oder aber mit bogenförmig verlaufenden Begrenzungsflächen, wobei je nach der Querschnittsform die Eindrückkraft und die Haltekraft regelbar ist.

Der Wulst bildet also einen sich vorzugsweise über den ganzen Umfang erstreckenden Kreisbogen einheitlichen Durchmessers, dessen Mittelpunkt in der Mittelachse des Befestigungselementes liegt.

Der Wulst 7 ist im Mittelbereich bezogen auf die radiale Breite der Oberfläche 8 des Schraubenkopfes 6 angeordnet, was für eine ausreichende Sicherung von besonderem Vorteil ist. Es ist dadurch noch beidseitig eine entsprechend große Oberfläche vorhanden, um das nötige Anzugsmoment gegen ein Losdrehen zu erzeugen.

Fig. 3 zeigt eine Mutter 14, welche an der einen Oberfläche 8 einen Wulst 7 aufweist, welcher die gleiche Wirkung hervorruft, wie dies bei der Schraube 5 der Fall ist. Bei einer Mutter 14 wäre es auch denkbar, an den beiden gegenüberliegenden Oberflächen 8 und 10 jeweils einen Wulst 7 vorzusehen.

Fig. 4 zeigt eine Ausführungsform eines Befestigungselementes in Form einer Unterlegscheibe 11. Hier sind ebenfalls an den voneinander abgewandten Oberflächen 8 Wülste 7 vorgesehen. Die Ausbildung der erfindungsgemäßen Merkmale an einer Unterlegscheibe 11 ist besonders zweckmäßig, weil dann nur ein einziges solches Befestigungselement derart ausgebildet werden muß. Die Wülste 7 an der Unterlegscheibe 11 graben sich somit in die Oberfläche 8 des Schraubenkopfes 6 und auch in das entsprechend zu verschraubende Werkstück ein, so daß die gleiche Wirkung erzielt wird, wie bei einer Verschraubung der Schraube 5, welche mit einem entsprechenden Wulst 7 ausgestattet ist.

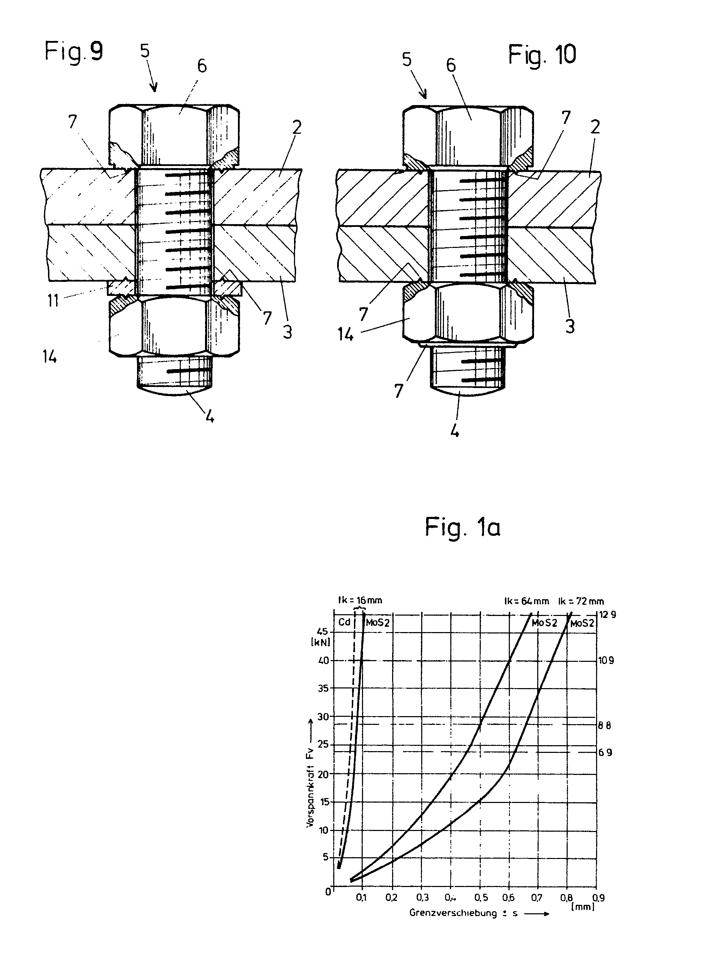

Die Fig. 9 und 10 zeigen Verschraubungen mit den vorstehend geschilderten Befestigungselementen, wobei die Wirkung der erfindungsgemäßen Maßnahmen ohne weiteres erkannt werden kann.

Beim Ausführungsbeispiel nach Fig. 5 ist der ringförmig verlaufende Wulst 7 in Umfangsrichtung gesehen in zwei oder mehrere bogenförmige Abschnitte 7' unterteilt. Bei einer derartigen Ausführung kommt es zu einem Einschneiden des Wulstes 7 in die entsprechende Oberfläche, da der jeweilige Anfang des entsprechenden Abschnittes 7' eine Schneidwirkung ausübt. Wenn hingegen der Wulst 7 durchgehend verläuft, findet lediglich ein Eindrücken in die gegenüberliegende Oberfläche statt. Bei einer solchen Ausführung dürfen die zwischen den Abschnitten 7' liegenden Bereiche jedoch nur sehr klein sein, damit die einwandfreie Wirkung einer Sicherung gegen radiales Verschieben zwischen den Kontaktflächen nicht vermindert wird oder gar verlorengeht.

Beim Ausführungsbeispiel nach Fig. 6 sind zwei koaxial zueinander verlaufende Wülste 7 vorgesehen, wobei durch eine derartige Maßnahme die Sicherheit gegen ein Verschieben des Schraubenkopfes bzw. der Mutter noch vergrößert wird. Selbstvertändlich wäre auch denkbar, mehr als zwei solcher Wülste koaxial zueinander anzuordnen.

Bei der Ausführung nach der Fig. 7 ist die Oberfläche 8 des Befestigungselementes im Bereich 12, also innerhalb des Wulstes 7 um ein Maß A gegenüber dem Bereich 13 der Oberfläche 8, welcher außerhalb des Wulstes 7 liegt, zurückversetzt. Dieses Maß der Zurückversetzung ist sehr klein und zweckmäßig auch kleiner als die Höhe des Wulstes 7. Dadurch wird bewirkt, daß die Befestigungselemente mit Sicherheit an den äußeren Umfangsrändern gegenseitig und am Werkstück abgestützt sind, so daß es nie zu einer Kippbewegung des Schraubenkopfes bzw. der Mutter kommen kann.

Beispielsweise bei einer Schraubverbindung der Größe M 12 (DIN 13) bzw. entsprechenden Muttern oder Unterlegscheiben beträgt die Höhe des Wulstes 7 annähernd 0,05 bis 0,2 mm und die Zurückversetzung A ca. 0,03 mm. Selbstverständlich sind diese Maßangaben durchaus variierbar, wobei jedoch auf jeden Fall die Höhe des Wulstes derart klein bemessen werden kann, daß sie kaum wahrnehmbar ist. In den Zeichnungen wurde der Wulst selbstverständlich entsprechend größer dargestellt, um dadurch die Erfindung erläutern zu können. Im Verhältnis zur Originalgröße ist die Höhe des Wulstes entsprechend kleiner. Die Höhe des Wulstes 7 entspricht also immer nur einem Bruchteil der Dicke bzw. der Höhe des entsprechenden Abschnittes des Befestigungselementes in Richtung der Mittelachse gemessen.

Beim Ausführungsbeispiel nach Fig. 8 sind die Durchmesser $D_1$ und $D_2$ der ringförmigen Wülste 7 an den voneinander abgewandten Oberflächen 8 verschieden groß ausgebildet, so daß diese Wülste 7 gegeneinander versetzt sind. Es wird dadurch beim Anziehen der Schraubverbindung vorerst zu einem Kippen des Unterlegscheibenkörpers kommen, wobei diese Maßnahme zusätzlich eine Sicherung mit sich bringen kann.

In der vorliegenden Beschreibung wurde die Erfindung anhand einer Schraube, einer Beilagscheibe sowie einer Mutter besprochen. Selbstverständlich können alle Befestigungselemente, die in irgendeiner Form gegen ein Lockern gesichert werden müssen, auf die erfindungsgemäße Art und Weise ausgestaltet werden. So ist es insbesondere denkbar, den Kopf von Nieten bzw. überhaupt Nietverbindungen entsprechend auszuführen, obwohl dort das Problem des Lösens durch eine Drehbewegung nicht entsteht.

Durch die vorliegende Erfindung wird mit konstruktiv sehr einfachen Maßnahmen eine Schraubensicherung geschaffen, welche in einwandfreier Weise ein Lösen einer Schraubenverbindung auch bei einer Wechselbelastung verhindert, ohne daß besondere konstruktive Maßnahmen für eine Erhöhung des Lösedrehmomentes geschaffen werden müssen.

**Patentansprüche**

1. Befestigungselement In Form einer Schraube (5), Schraubenmutter (14) oder ebenen Unterlagscheibe (11), mit einer an einer Werkstückoberfläche (2) oder einem anderen Befestigungselement unter Anpreßdruck zur Anlage kommenden, senkrecht zur Mittelachse desselben verlaufenden Oberfläche (8), zur Herstellung einer durch Querkräfte auf den befestigten Teil beanspruchbaren Schraubverbindung, wobei an wenigstens einer zur Anlage an einem Werkstück (2) oder einem anderen Befestigungselement kommenden Oberfläche (8) des Befestigungselementes (5; 14; 11) wenigstens ein kreisbogenförmiger, konzentrisch zur Mittelachse des Befestigungselementes verlaufender, aus der ansonsten ebenen Anlageoberfläche (8) vorstehender Wulst (7) ausgebildet ist, dadurch gekennzeichnet, daß der Wulst (7) einen Kreisbogen einheitlichen Durchmessers bildet, der sich – allenfalls mit geringen Unterbrechungen – über den ganzen Umfang erstreckt.

2. Befestigungselement nach Anspruch 1, dadurch gekennzeichnet, daß der Wulst (7) im Querschnitt geradlinig verlaufende Begrenzungsflächen aufweist (Fig. 4, 7, 8).

3. Befestigungselement nach Anspruch 1 oder 2, dadurch gekennzeichnet, daß die Höhe des Wulstes (7) bzw. der Wulstabschnitte in Richtung der Mittelachse (9) des Befestigungselementes gemessen in an sich bekannter Weise nur einem Bruchteil der Dicke des Befestigungselementes bzw. des entsprechenden Abschnittes desselben entspricht (Fig. 4–7).

4. Befestigungselement nach Anspruch 3, dadurch gekennzeichnet, daß die Höhe des Wulstes (7) bzw. der Wulstabschnitte in Richtung der Mittelachse (9) des Befestigungselementes gemessen bei Schrauben der Größe M 12 (DIN 13) bzw. entsprechenden Schraubenmuttern oder Unterlegscheiben annähernd 0,05 bis 0,2 mm beträgt.

5. Befestigungselement nach einem der Ansprüche 1 bis 4, dadurch gekennzeichnet, daß die den Wulst bzw. die Wulstabschnitte aufweisende Oberfläche (8) des Befestigungselementes im Bereich (12) innerhalb des Wulstes (7) um ein Maß (A) kleiner als die Höhe des Wulstes (7) gegenüber der Ebene des außerhalb des Wulstes (7) liegenden Bereiches (13) zurückversetzt ist (Fig. 7).

6. Befestigungselement nach einem der Ansprüche 1 bis 5, dadurch gekennzeichnet, daß an beiden voneinander abgewandten Oberflächen (8) einer Unterlegscheibe (11) ein oder mehrere, ringförmige Wülste (7) ausgebildet sind (Fig. 4, 7, 8).

7. Befestigungselement nach Anspruch 6, dadurch gekennzeichnet, daß die Durchmesser (D₁, D₂) der ringförmigen Wülste (7) an den voneinander abgewandten Oberflächen (8) verschieden groß sind (Fig. 8).

## Claims

1. A fastening element with locking to prevent undesired loosening in the form of a bolt (5), nut (14) or flat washer (11) wit ah surface (8) which bears against a workpiece surface (2) or another fastening element with bearing pressure and which extends at right angles to the median axis thereof, for producing a screw connexion which can be acted upon by transverse forces on the fastened part, there being formed on at least one surface (8) of the fastening element (5; 14; 11), which bears on a workpiece (2) or another fastening element, at least one arcuate bead (7) which extends concentrically to the median axis of the fastening element and which projects from the otherwise flat abutment surface (8), characterized in that the bead (7) forms an arc of uniform diameter which extends — at the most with slight interruptions — over the entire periphery.

2. A fastening element according to Claim 1, characterized in that the bead (7) has defining surface extending rectilinearly in cross-section (Figs. 4, 7, 8).

3. A fastening element according to claim 1 or 2, characterized in that the height of the bead (7) or the portions of the bead as measured in the direction of the median axis (9) of the fastening element corresponds in a manner known per se only to a fraction of the thickness of the fastening element or the corresponding portion thereof (Figs. 4 to 7).

4. A fastening element according to Claim 3, characterized in that the height of the bead (7) or the portions of the bead as measured in the direction of the median axis (9) of the fastening element amounts to approximately 0.05 to 0.2 mm in the case of bolts of the size M 12 (DIN [German Industrial Standard] 13) or corresponding nuts or washers.

5. A fastening element according to any one of Claims 1 to 4, characterized in that in the region (12) inside the bead (7) the surface (8) of the fastening element comprising the bead or the portions of the bead is set back from the plane of the region (13) lying outside the bead (7) by an amount (A) less than the height of the bead (7) (Fig. 7).

6. A fastening element according to any one of Claims 1 to 5, characterized in that one or more annular beads (7) are formed on both surfaces (8) of a washer (11) facing away from one another (Figs. 4, 7, 8).

7. A fastening element according to Claim 6, characterized in that the diameter (D₁, D₂) of the annular beads (7) are of different sizes on the surfaces (8) facing away from one another (Fig. 8).

## Revendications

1. Elément de fixation, avec sécurité contre un relâchement indésirable, sous la forme d'une vis (5) écrou (14) ou rondelle (11) plane, comportant une surface (8) venant s'appliquer sous pression contre une surface de pièce à travailler (2) ou un autre élément de fixation et s'étendant perpendiculairement à l'axe central de l'élément de fixation, en vue de la réalisation d'un assemblage par vis soumis à l'action de forces transversales sur la partie fixée, au moins un bourrelet (7) étant constitué sur au moins une surface (8) de l'élément de fixation (5, 14, 11) venant s'appliquer contre une pièce à travailler (2) ou un autre élément de fixation, bourrelet en forme d'arc de cercle, s'étendant concentriquement à l'axe central de l'élément de fixation et faisant saillie de la surface d'appui (8) plane par ailleurs, caractérisé en ce que le bourrelet (7) forme un arc de cercle de diamètre uniforme qui s'étend tout au plus avec de très faibles interruptions sur tout le pourtour.

2. Elément de fixation selon la revendication 1, caractérisé en ce que le bourrelet (7) présente, en section transversale, des surfaces de limitation s'étendant en ligne droite (figures 4, 7, 8).

3. Elément de fixation selon la revendication 1 ou 2, caractérisé en ce que la hauteur du bourrelet (7); ou des tronçons de bourrelet, mesurée dans la direction de l'axe cenral (9) de l'élément de fixation ne correspond de manière connue en soi, qu'à une fraction de l'épaisseur de l'élément de fixation ou du tronçon correspondant de celui-ci (figures 4—7).

4. Elément de fixation selon la revendication 3, caractérisé en ce que la hauteur du bourrelet (7), ou des tronçons de bourrelet, mesurée dans la direction de l'axe central (9) de l'élément de fixation, s'élève, dans le cas de vis de grandeur M12 (DIN 13) ou écrous correspondants, ou rondelles correspondantes, à environ 0,05 à 0,2 mm.

5. Elément de fixation selon l'une des revendications 1 à 4, caractérisé en ce que la surface (8) de l'élément de fixation qui comporte le bourrelet ou les tronçons de bourrelet, présente dans la zone (12) située à l'intérieur du bourrelet (7), un décalage en retrait inférieur d'une grandeur (A) à la hauteur du bourrelet (7), par rapport au plan de la zone (13) située à l'extérieur du bourrelet (7)

(fig. 7).

6. Elément de fixation selon l'une des revendications 1 à 5, caractérisé en ce que sur les deux surfaces (8) situées à l'opposé l'une de l'autre d'une rondelle (11) sont constitués d'un ou plusieurs bourrelets (7) de forme annulaire (fig. 4, 7, 8).

7. Elément de fixation selon la revendication 6, caractérisé en ce que les diamètres (D₁ D₂) des bourrelets (7) de forme annulaire prévus sur les surfaces (8) situées à l'opposé l'une de l'autre sont de grandeurs différentes (fig. 8).

Fig. 1

5

6

2

1

3

4

14

Fig. 2

5

6

8

7

9

4

Fig. 3

7

8

14

9

10

Fig. 5

8

7

7'

7'

7

Fig. 4

7

8

11

7

8

Fig. 7

13

8

7

12

A

11

8

7

Fig. 6

7

Fig. 8

8

7

D₁

11

7

D₂

8

7

Fig. 9

Fig. 10

Fig. 1a